(19) **Europäisches Patentamt / European Patent Office / Office européen des brevets**

(11) **EP 1 741 097 B1**

(12) **EUROPEAN PATENT SPECIFICATION**

(45) Date of publication and mention
of the grant of the patent:
**21.05.2008 Bulletin 2008/21**

(21) Application number: **05718639.7**

(22) Date of filing: **06.04.2005**

(51) Int Cl.:
**G11B 7/135** *(2006.01)*      **G11B 7/09** *(2006.01)*

(86) International application number:
**PCT/IB2005/051121**

(87) International publication number:
**WO 2005/101391 (27.10.2005 Gazette 2005/43)**

(54) **AIR GAP SERVO FOR OPTICAL RECORDING.**

LUFTSPALT-SERVO FÜR DIE OPTISCHE AUFZEICHNUNG

SERVOCOMMANDE D'ECARTEMENT POUR ENREGISTREMENT OPTIQUE A CHAMP PROCHE

(84) Designated Contracting States:
**AT BE BG CH CY CZ DE DK EE ES FI FR GB GR HU IE IS IT LI LT LU MC NL PL PT RO SE SI SK TR**

(30) Priority: **16.04.2004 EP 04101585**
**26.08.2004 EP 04104091**

(43) Date of publication of application:
**10.01.2007 Bulletin 2007/02**

(73) Proprietor: **Koninklijke Philips Electronics N.V.**
**5621 BA Eindhoven (NL)**

(72) Inventors:
• **LEE, Juil;**
**c/o Société Civile SPID**
**F-75008 PARIS (FR)**
• **ZIJP, Ferry;**
**c/o Société Civile SPID**
**F-75008 PARIS (FR)**

(74) Representative: **Uittenbogaard, Frank**
**Philips**
**Intellectual Property & Standards**
**P.O. Box 220**
**5600 AE Eindhoven (NL)**

(56) References cited:
**US-A1- 2004 013 077**

• **ISHIMOTO T ET AL: "Gap servo system for a blaxial device using an optical gap signal in a near field readout system" OPTICAL MEMORY AND OPTICAL DATA STORAGE TOPICAL MEETING, 2002. INTERNATIONAL SYMPOSIUM ON 7-11 JULY 2002, PISCATAWAY, NJ, USA,IEEE, 7 July 2002 (2002-07-07), pages 287-289, XP010600201 ISBN: 0-7803-7379-0 cited in the application**

Printed by Jouve, 75001 PARIS (FR)

**Description**

**Field of the invention**

The invention relates to a device for near field optical recording, information being represented by marks in a track on a record carrier, the device comprising a head including a lens to be positioned by a lens actuator at a near field distance from a surface of the record carrier for generating a scanning spot on the track.

The invention further relates to a pull-in method for bringing a lens from a remote distance to a near field distance from a surface of a record carrier for use in near field optical recording, information being represented by marks in a track on the record carrier to be scanned via a head including the lens.

**Background of the invention**

An air gap servo for near-field optical recording is known from the document "Gap Servo System for a Biaxial Device Using an Optical Gap Signal in a Near Field Readout System," by T. Ishimoto, K. Saito, T. Kondo, A. Nakaoki and M. Yamamoto, published at ISOM/ODS 2002 (further referred to as doc[1]). Doc[1] describes a readout method using a near field optical head and an optical record carrier, which head consists of an aspherical lens and a Solid Immersion lens (SIL). In the system it is necessary to maintain an air gap between the SIL bottom surface and the disc surface constantly in a near field position where an evanescent wave is detectable. An air gap servo system controls a head actuator system to maintain the required position of the head. A specific starting servo system is proposed for bringing the head near the surface from a remote starting position, a so-called pull-in procedure. The pull-in procedure is completed by a switch over to the air gap servo loop when the head moves into a near field position. It is to be noted that the required air gap is in the order of 50 nm or less. Hence, during the pull-in procedure overshoot may pose a severe problem, eventually resulting in a head-disc crash if the head comes into contact with the disc surface.

The described starting servo system provides a ramp control signal to the head actuator in order to make the head approach the disc at a constant speed. An air gap error signal is generated to detect the distance between the SIL and the disc surface. However, the air gap error signal is only available in a near field region of approximately 50 nm. Due to the late appearance of the air gap error signal and in view of the problem of overshoot the maximum ramp speed is limited, and the pull-in procedure is slow.

It is noted that US 2004/0013077 describes an optical pickup device having a solid immersion lens. A component of the reflected light from the optical disc in the polarized state perpendicular to the polarized state of the reflected light which prevails when the distance between the surface of the optical disc and a flat portion of the solid immersion lens is zero is detected. The so detected light intensity is associated with the distance between the optical disc surface and the solid immersion lens to accurately detect the minute gap between the optical disc and the solid immersion lens.

Therefore it is an object of the invention to provide an air gap servo system and pull-in method for optical recording that is fast and has a low risk for a head-disc crash.

According to a first aspect of the invention the object is achieved with a device as defined in claim 1.

According to a second aspect of the invention the object is achieved with a method as defined in claim 8.

Due to the substantially zero velocity of the lens at the sequence of approach instants the risk of a head disc crash is low, as substantially no overshoot will occur. Due to the periodical nature the movement of the lens is controllable in a fast way. Hence the measures have the effect of speedily bringing the lens to the target near field distance. This has the advantage that the start-up time before a user can start reading or recording on the record carrier is decreased.

The invention is also based on the following recognition. The inventors have seen that the problem of overshoot can be substantially eliminated by generating the approach instants at which the velocity is substantially zero. This is achieved by the increasing periodical excitation. Surprisingly the total time for the pull-in procedure is reduced when compared to a ramp based open-loop approach operation. In particular a sinusoidal excitation for the approach control guarantees a substantially zero velocity when the air-gap servo system starts its closed-loop operation at the switching instant.

In an embodiment of the device the air gap controller comprises a reference generator for, in a hand-over mode, providing a reference near field distance changing from a first target near field distance to a second, lower target near field distance via a transfer function. Furthermore, the reference generator is for providing reference values to a controller unit based on a two degree of freedom control technique in said hand-over mode. Advantageously, the two degree-of-freedom control technique for the hand-over control relaxes the design constraints between the overshoot and the settling time.

Further preferred embodiments of the device and method according to the invention are given in the appended claims, disclosure of which is incorporated herein by reference.

**Brief description of the drawings**

These and other aspects of the invention will be apparent from and elucidated further with reference to the embodiments described by way of example in the following description and with reference to the accompanying drawings, in which

Fig.1 shows an optical recording device having an air gap servo,
Fig.2 shows a schematic diagram of elements in a head for near field optical recording,
Fig.3 shows calculated reflection curves of the gap error signal,
Fig.4 shows a prior art approach method by ramp voltage,
Fig.5 shows a pull-in response of the prior art,
Fig.6 shows an air gap servo system having mode-switch control,
Fig.7 shows an approach method according to the invention,
Fig.8 shows a reference generator,
Fig.9 shows reference trajectories,
Fig.10 shows a diagram of a hand-over controller based on two degree-of-freedom control,
Fig.11 shows simulated pull-in responses for various reference trajectories with different settling times,
Fig.12 shows a schematic diagram of the final air-gap control,
Fig.13 shows the measurement result of the transient responses from the proposed pull-in procedure,
Fig. 14 shows a measurement of transient responses in closed-loop operation of the servo, and
Fig. 15 shows various embodiments of an increasing periodical excitation signal.

In the Figures, elements which correspond to elements already described have the same reference numerals.

**Description of preferred embodiments**

An optical recording system using a near field optical head, which consists of an aspherical lens and a Solid Immersion Lens (SIL), has been proposed as a technology to read out 50 Gbyte or more on a 12 cm optical disc. In this system, it is essential to maintain an air gap between the SIL bottom surface and the disc constantly in a near field position where the evanescent wave is detectable. Thereto an air gap servo system is required

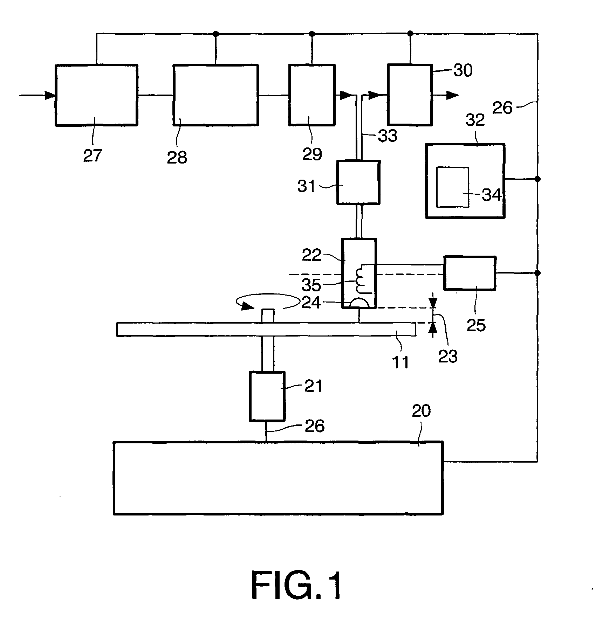

Fig.1 shows an optical recording device having an air gap servo. The device is for optically reading and/or recording data on a record carrier 11 via a near field optical system. The near field optical system is known as such, *inter alia* from doc[1] and from K. Saito, et. al, "Readout Method for Read Only Memory Signal and Air Gap Control Signal in a Near Field Optical Disc System," Jpn. J. Appl. Phys. Vol. 41 (2002), pp.1898-1902 (further referred to as doc [2]). The disc-shaped record carrier 11 has a track 9 arranged as a spiral or annular pattern of turns constituting substantially parallel tracks on an information layer. The track on a recordable type of record carrier may be indicated by a pre-embossed track structure provided during manufacture of the blank record carrier, for example a pregroove. A track structure may also be formed by regularly spread marks which periodically cause servo signals to occur. Recorded information is represented on the information layer by optically detectable marks recorded along the track. The marks are constituted by variations of a physical parameter and thereby have different optical properties than their surroundings, e.g. variations in reflection obtained when recording in materials such as dye, alloy or phase change material, or variations in direction of polarization obtained when recording in magneto-optical material. The record carrier may be intended to carry real-time information, for example video or audio information, or other information, such as computer data.

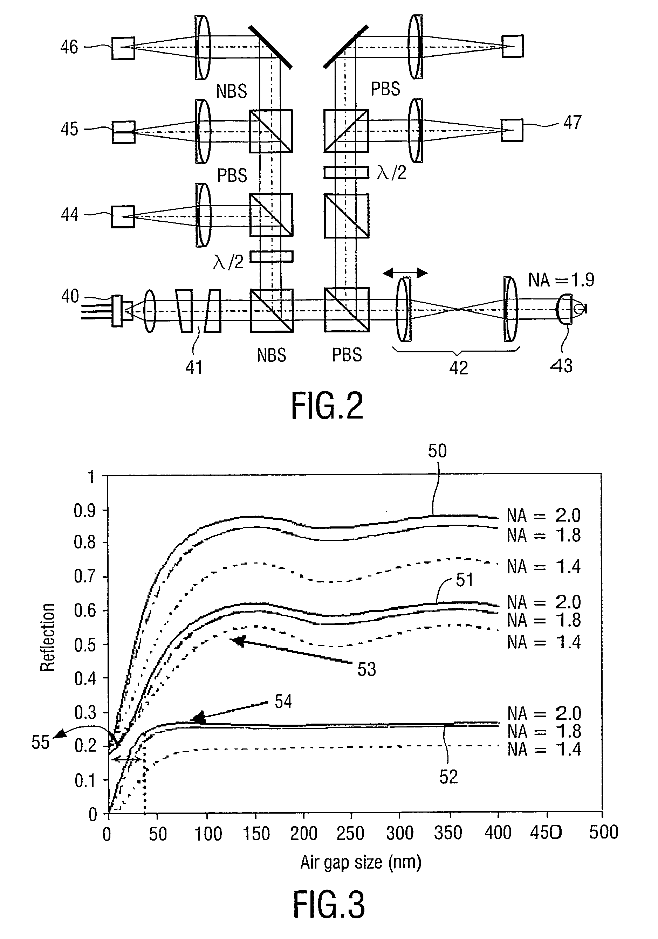

The device is provided with means for scanning a track on the record carrier 11, which means include a drive unit 21 for rotating the record carrier 11, a head 22, a servo unit 25 for positioning the head 22 on the track and a control unit 20. The head 22 comprises an optical system of a known type for generating a radiation beam guided through optical elements focused to a radiation spot on a track of the information layer of the record carrier. The radiation beam is generated by a radiation source, e.g. a laser diode. The head comprises a lens 24, and a lens actuator 35 coupled to an air gap servo controller in the servo unit 25 for positioning the lens at a near field distance 23 from the surface of the record carrier 11. A detailed example of optical elements in the head is shown in Fig.2. According to the invention the air gap servo includes a air-gap controller 32, which may include a reference generator 34 for a hand-over mode. The air gap controller has an approach mode for bringing the lens from a remote distance to the near field distance by providing an increasing periodical excitation signal to the lens actuator for generating a sequence of approach instants at which the lens approaches the surface. At the approach instants the lens has substantially zero velocity in a direction perpendicular to the surface of the record carrier. The sequence of approach instants brings the lens subsequently closer to the surface. Finally, when the lens is within the near field distance at one of the approach instants, the air gap controller switches to a closed loop mode. Switching from the open loop approach mode to the closed loop mode may be performed in a hand-over mode, during which reference trajectories for position, and/or speed and acceleration of the lens are generated by the reference generator 34. Embodiments of the air gap servo system and elements are described and shown below in detail.

The head further comprises (not shown) a focusing actuator for focusing the beam to create the radiation spot on the track by moving the focus of the radiation beam along the optical axis of said beam, and a tracking actuator for fine positioning of the spot in a radial direction on the center of the track. The tracking actuator may comprise coils and permanent magnets for radially moving an optical element or may alternatively be arranged for changing the angle of a reflecting element. For reading the radiation reflected by the information layer is detected by a detector of a usual type, e.g. a four-quadrant diode, in the head 22 for generating detector signals, including a main scanning signal 33 and sub-detector signals for tracking and focusing. A front-end unit 31 is coupled to the head 22 for receiving the detector signals based on radiation reflected from the track. The main scanning signal 33 is processed by read processing unit 30 of a usual type including a demodulator, deformatter and output unit to retrieve the information.

The control unit 20 controls the recording and retrieving of information and may be arranged for receiving commands from a user or from a host computer. The control unit 20 is connected via control lines 26, e.g. a system bus, to the other units in the device. The control unit 20 comprises control circuitry, for example a microprocessor, a program memory and interfaces for performing the procedures and functions as described below. The control unit 20 may also be implemented as a state machine in logic circuits.

The device may be provided with recording means for recording information on record carriers of a writable or re-writable type. The recording means cooperate with the head 22 and front-end unit 31 for generating a write beam of radiation, and comprise write processing means for processing the input information to generate a write signal to drive the head 22, which write processing means comprise an input unit 27, a formatter 28 and a modulator 29. For writing information the power of the beam of radiation is controlled by modulator 29 to create optically detectable marks in the recording layer.

In an embodiment the input unit 27 comprises compression means for input signals such as analog audio and/or video, or digital uncompressed audio/video. Suitable compression means are described for video in the MPEG standards, MPEG-1 is defined in ISO/IEC 11172 and MPEG-2 is defined in ISO/IEC 13818. The input signal may alternatively be already encoded according to such standards.

Fig.2 shows a schematic diagram of elements in a head for near field optical recording. The schematic diagram provides an example of a near-field optical player setup used for readout experiments. In the experimental player a conventional DVD actuator is used for air gap control and tracking in which a special near field lens is mounted having a numerical aperture NA = 1.9. In the Fig.PBS = Polarizing beam-splitter; NBS = Non-polarizing beam-splitter; and λ/2 = half-wave plate. The set-up consists of a main branch comprising a blue-violet laser 40 and collimator lens, beam shaping optics 41, two beam-splitters and a telescope 42 for focus adjustment of the NA = 1.9 lens 43. The left side branch in the Fig.contains a photodiode 44 for detection of the RF central aperture signal that contains the data information and is polarized parallel to the main beam. In the same branch a split detector 45 is positioned to generate a push-pull tracking error signal. Moreover, for the experimental set-up only, a CCD camera 46 is included to observe the irradiance pattern at the exit pupil. A half-wave plate λ/2 is used to control the amount of light that the PBS splits and directs towards the RF detector and the push pull detector, respectively.

The second branch on the right side of the Fig.is used to generate the error signal for air gap control. In near field optical disk systems, the SIL lens 43 needs to be positioned within the evanescent decay distance from the disk. In our set-up the SIL to disk distance is typically 25 nm. To allow air gap control with a mechanical actuator at such small distances, a suitable error signal is required. As described in doc[1] and doc[2], a linear signal that is suitable as a gap error signal (GES) can be obtained from the reflected light with a polarization state perpendicular to that of the main beam that is focused on the disk. A significant fraction of the light becomes elliptically polarized after reflection at the SIL-air-disk interfaces: this effect creates the well-known Maltese cross when the reflected light is observed through a polarizer. By integrating all the light of this Maltese cross using polarizing optics and a single photodetector 47, a so-called "RF ⊥ pol" signal is obtained, and a gap error signal GES is generated from the "RF ⊥ pol" signal.

Fig.3 shows calculated reflection curves of the gap error signal. The Fig.is based on simulated GES curves on Si disc with no grooves, and indicates reflection against air gap size. A first curve 50 shows the total reflection, a second curve 51 shows reflection for the parallel polarization, and a third curve shows reflection for the perpendicular polarization as a function of the air gap width, each curve showing the result for three NA values. The second curve 51 may be used as HF signal 53 for data read-out. The amount of the perpendicular polarization state of light reflected at the bottom of the SIL is applied as a gap error signal 54 (GES) to control the air gap. As shown in the Figure, however, the gap error signal is available only in a GES linear range 55 within a near field regime of approximately 50nm.

Therefore, a so-called pull-in procedure is required and has been proposed in doc[1]. By the pull-in procedure, the optical head approaches the near-field regime from its initial far-field position through an open-loop operation, and then the air gap servo system is switched into a closed-operation as smooth as possible to avoid any collision of the optical head with the disc.

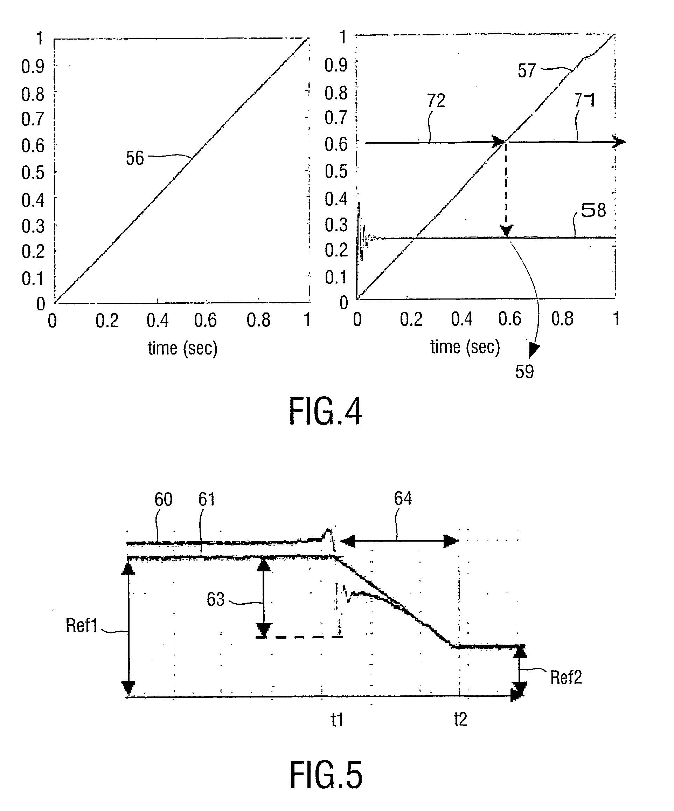

Fig.4 shows a prior art approach method by ramp voltage. In the prior art doc[1] a ramp voltage 56 was applied to a biaxial actuator that positions the lens. The left graph shows an applied nonnalized control current versus time, and the right graph shows a normalized position 57 and velocity 58 during approaching from a far-field range 72 to a near-field rage 71. This leads to a constant approaching velocity at the switching instant when air gap servo system starts its closed-loop operation. However, if the air gap servo system is digitally implemented, in order to avoid any collision of the optical head with the disc at the switching moment, a following condition 59 should be met between the approaching velocity, the GES linear range, and the sampling frequency Fs:

$$\text{Velocity} \; < \; (\text{GES linear range}) \; \text{x} \; (\text{sampling frequency Fs})$$

For instance, if the approaching velocity is 5 mm/sec and the sampling period is 20usec, then the optical head can travel 100nm, which is twice the GES linear range, during one sampling period. Therefore, in this case, either the approaching velocity should be made slower or the sampling frequency should be made higher.

Fig.5 shows a pull-in response of the prior art. Curve 61 shows the gap reference values for the air gap, and curve 60 shows the response of gap error signal GES. When the optical head enters the near-field regime and hence the air gap servo is switched into its closed-loop operation, the gap reference for the gap servo loop is not set to its final target value (Ref2), but it is gradually lowered to its final value over a fixed time interval from t1 to t2, which is referred to as 'settling time' 64, while overshoot 63 occurs at t1. In this way, the air gap servo system can start its closed-loop operation without colliding of the optical head with the disc. However, as was shown in doc[1], there exists a design trade-off between the settling time and the overshoot, which can limit the overall pull-in performance.

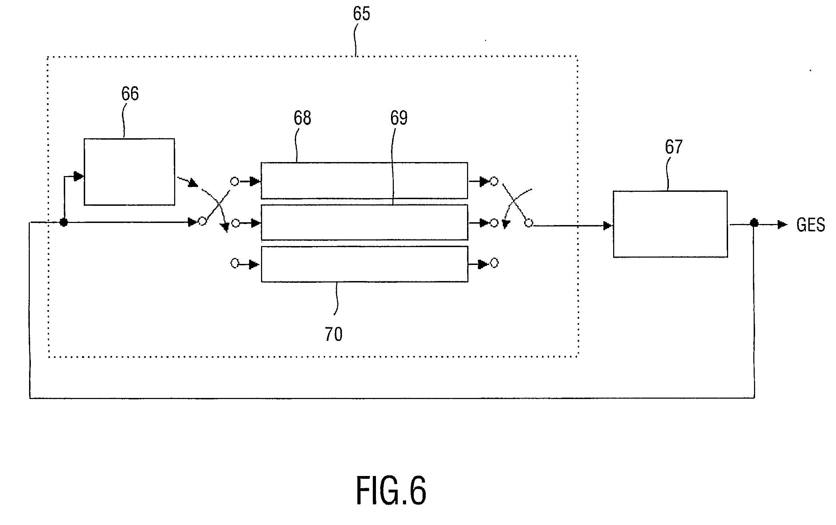

Fig.6 shows an air gap servo system having mode-switch control. The figure presents a schematic diagram of a proposed air-gap servo system, including a digital controller 65 and an actuator 67. The controller 65 corresponds to the pull-in controller 32 in Fig.1, which may includes a hand-over unit 34 corresponding to hand-over controller 69. Finally a closed loop operation is performed by air gap controller 70. The air gap servo system can be referred to as mode-switching control because the three different control structures are, depending upon the operating condition, switched from one to another during the whole servo action by a state machine 66. Precisely speaking, an approach control 68 is to move the optical head from its initial far-field position into the near-field regime where the linear GES is detected; the hand-over control 69 is to achieve a smooth and fast transient response during the switching from the open-loop approach control into the final closed-loop air gap regulating control; and finally the air-gap control 70 is to maintain the air-gap around a fixed target air gap. Here, the pull-in procedure is defined as the combination of the approach control and the hand-over control.

Now, the new pull-in procedure will be explained. First, in the approach control mode, instead of the ramp signal as in the prior art, a sinusoidal signal with its amplitude increasing over time is applied to the actuator as shown in Fig. 5(a). Assuming that the actuator is modeled as a $2^{nd}$ order mass-damping-spring system, we see that the corresponding position and velocity behaviors are also sinusoidal with the amplitude increasing over time.

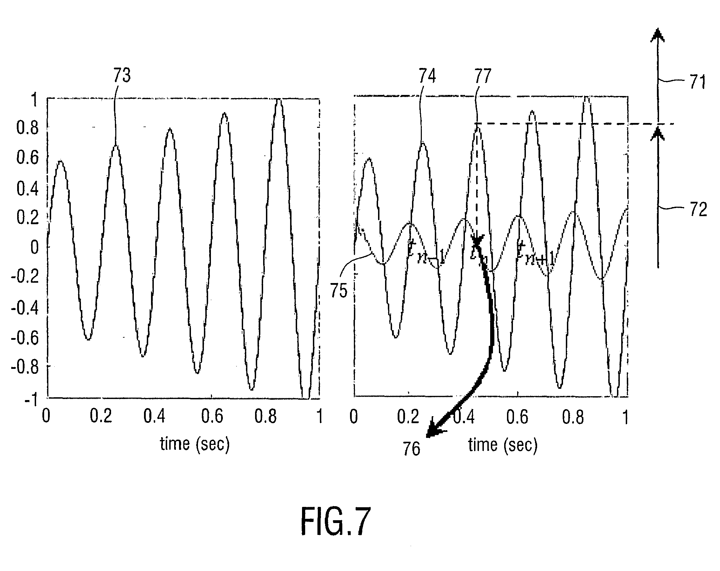

Fig.7 shows an approach method according to the invention. The left graph shows an applied increasing periodical signal 73 as normalized current versus time, and the right graph shows a normalized position 74 and velocity 75 during approaching from a far-field range 72 to a near-field range 71. This leads to a sequence of approach instants such as first approach instant 77 where the near-field region is just entered for the first time, and a periodic approaching velocity 75 having about zero speed at the approach instants. In particular the velocity is substantially zero at said first approach instant 77 as indicated by arrow 76, at which switching the air gap servo system to the closed-loop operation may be performed. Hence, as is shown in the Figure, at some point in time $t = t_n$, the positive peak position of the optical head starts to enter the near-field regime. Therefore, if the mode switching, from the open-loop approach control into the closed-loop or hand-over control, occurs at $t = t_n$, the velocity of the optical head is kept zero at the switching instant. Thereby the overshoot is significantly reduced in the transient responses at the switching moment even with relatively low sampling frequency.

In an embodiment, when the optical head moves into a near field position and the gap error signal is available, the air gap servo system is switched into the closed-loop control operation via a hand-over control. The gap reference for the gap servo loop is not set to its final target value Ref2, but is generated by a reference generator to provide a smooth trajectory from an initial reference Ref1 to the final target air gap distance Ref2.

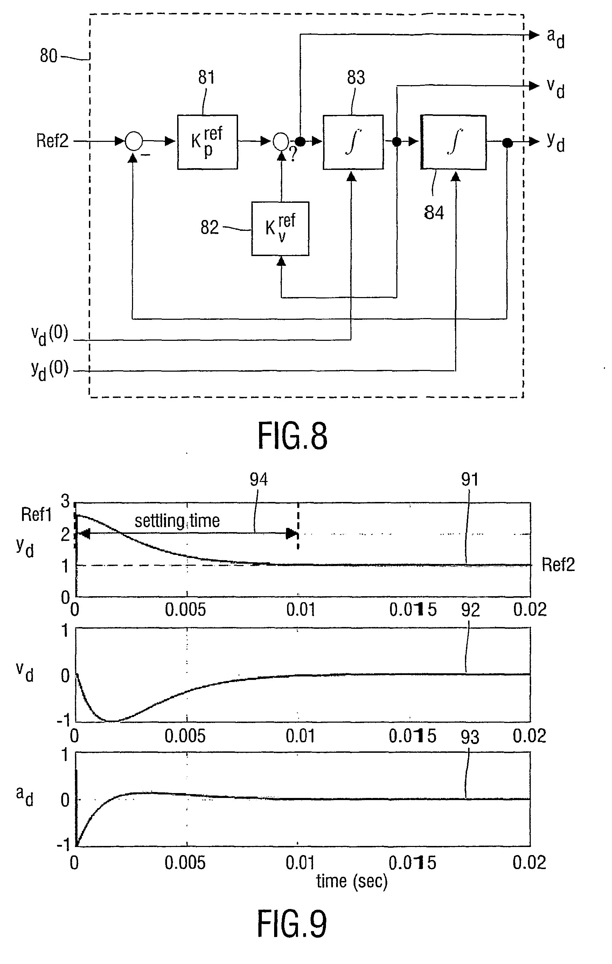

Fig.8 shows a reference generator. The transfer function representation from the target gap value Ref2 to the position output $y_d$ of the reference generator is given by :

$$Y_d(s) = \frac{K_p^{ref}}{s^2 + K_d^{ref} s + K_p^{ref}} \operatorname{Re} f2(s)$$

Thereby, the actual gap reference $y_d$ is smoothly lowered from the starting value Ref1 towards its final target value Ref2. In the Fig.the new setpoint value Ref2 is input to a control loop containing a gain unit 81, and a second gain unit 82 coupled to a sum unit for generating an acceleration output $a_d$, which is coupled to a first integrator 83 to generate a velocity output $v_d$, which is coupled to a second integrator 84 to generate a position output $y_d$. The first and second integrator are set by starting values $v_d(0)$ and $y_d(0)$ respectively.

Fig.9 shows reference trajectories. A first curve 91 shows the reference position $y_d$, a second curve 92 shows the reference velocity $v_d$, and a third curve shows a reference acceleration $a_d$. During a settling time 94 the target distance is smoothly transferred from a first value Ref1 to a second, usually final value Ref2. Note that the settling time 94 and the overshoot of the gap reference is determined by the gains of the reference generator. In addition, the reference generator provides the velocity and the acceleration reference trajectories, $v_d$ and $a_d$ respectively, for a tracking controller in a hand-over controller.

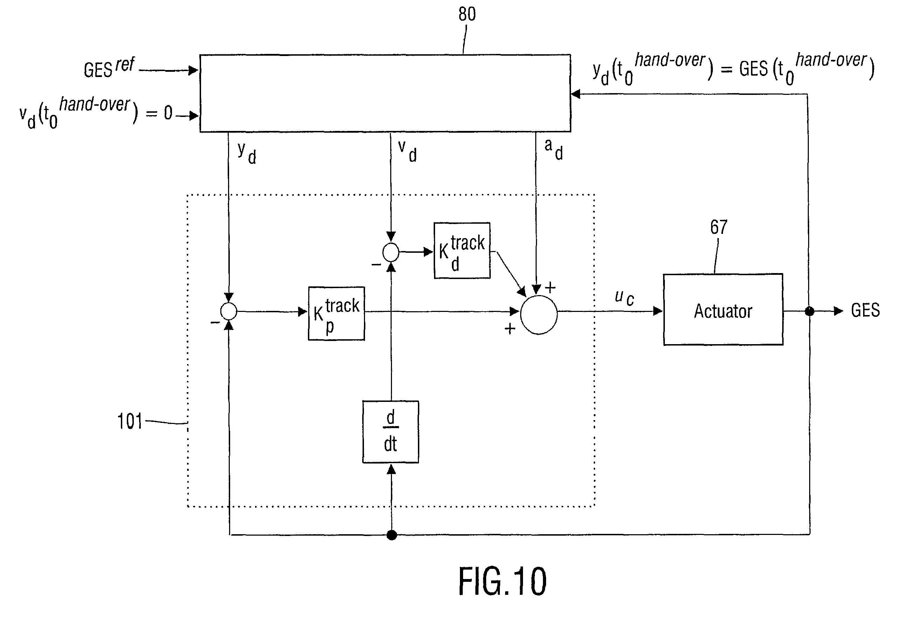

Fig.10 shows a diagram of a hand-over controller based on two degree-of-freedom control. A controller unit 101 generates a control signal $u_c$ to the actuator 67 based on the gap error signal GES in a closed loop mode. Gain units indicating various tracking gains for the closed loop mode are configured as usual in a servo controller based on proportional and differential control. In a hand-over mode the tracking control unit is provided with the values $y_d$, $v_d$, and $a_d$ as generated by the reference generator to additionally provide the position, velocity and acceleration values in the tracking controller. The way of controlling is called a two degree-of-freedom (2-DOF) control because, in this case, the gains of the reference generator determines the settling time of the gap reference whereas the gains of the tracking controller determines the overshoot, or the transient behavior, at the switching instant from the open-loop into the closed-loop operation. Therefore, the two design criteria, the settling time and the overshoot, can be designed independently of each other.

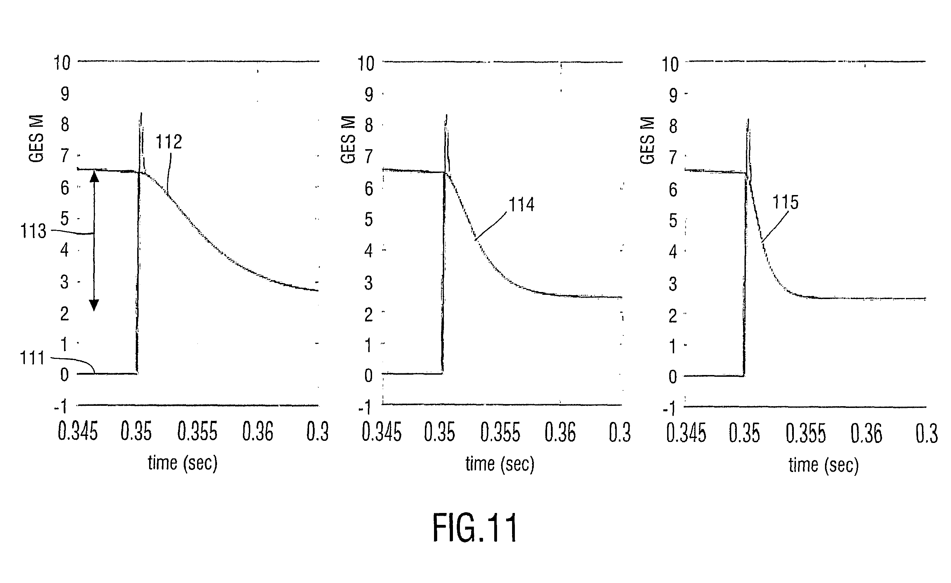

Fig.11 shows simulated pull-in responses for various reference trajectories with different settling times. A left graph shows a reference 111 and response 112 for a settling time of20msec, the mid graph a response 114 for 1Omsec and the right graph a response 115 for 5msec. It can be observed that the overshoot 113 is substantially equal while the settling time is different. Further details of the 2-DOF technique can, for example, be found in G. Franklin, J. Powell, and A. Emami-Naeini, Feedback Control of Dynamic Systems, 4th Ed. Prentice-Hall, 2002.

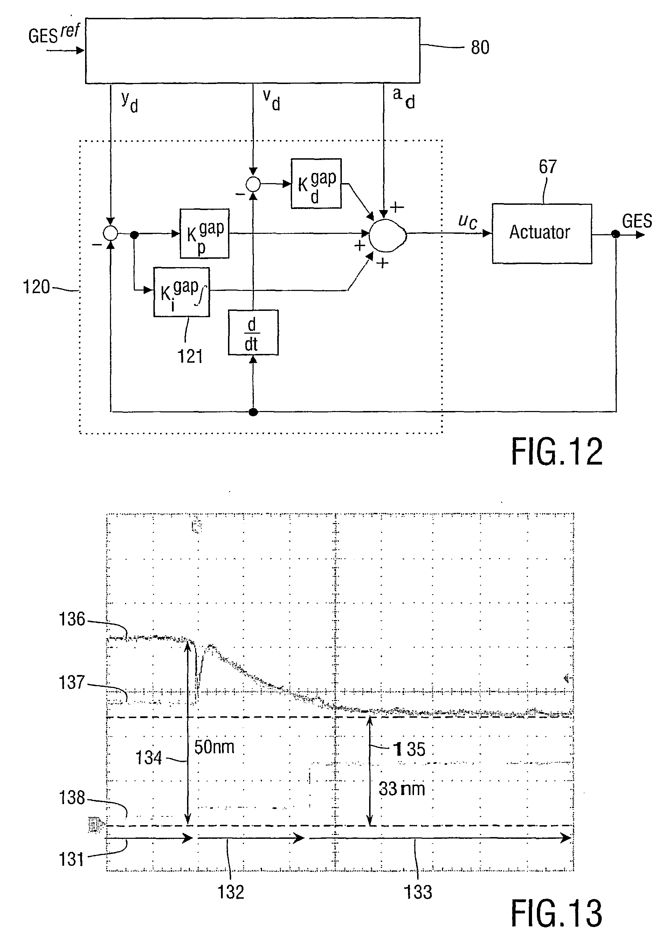

Fig.12 shows a schematic diagram of the final air-gap control. A controller of the PID type (proportional, integrating and differentiating nature) is switched into operation when the GES is close to the target gap value (Ref2). Basically it is a standard PID controller, but it can also be any other control method to regulate the air gap around the target gap. Note that the integrator 121 has been added with respect to Fig. 10.

Fig.13 shows the measurement result of the transient responses from the proposed pull-in procedure. A first curve 136 represent the gap error signal GES, a second curve 137 represents the reference and a third curve 138 is mode, e.g. the output of the state-machine, which determines the mode of the controller depending on the operating condition. A first mode 131 is the approach mode, a second mode is the hand-over mode 132, and the final state is the closed loop air gap control 133. As can be seen in the figure, the optical head can successfully settle down to the target gap 135 of 3 3nm from its initial far-field position, via a first reference 134 at 50 nm, without colliding with the disc.

The effect of the new pull-in method in the air gap servo is that the amplitude-increasing sinusoidal signal has been applied to the actuator when the optical head approaches the near-field regime from its far-field regime. This results in a zero velocity when the air-gap servo system starts its closed-loop operation. As a result, the overshoot at the switching instant can be greatly reduced with a relatively low sampling frequency.

Additionally the 2 degree-of-freedom (DOF) control technique has been applied for the hand-over control to relax the design constraints between the overshoot and the settling time. As a result, the pull-in performance can be significantly improved.

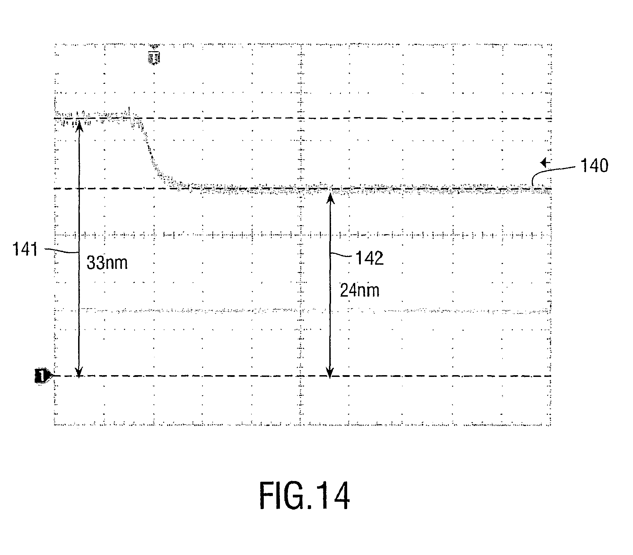

Fig. 14 shows a measurement of transient responses in closed-loop operation of the servo. The gap error signal 140 is shown when the target air gap distance is set at a first setpoint 141 at value 33 nm, and subsequently at a second setpoint 142 at value 24nm. The figure shows that, once the air gap servo is in lock, or in the closed-loop operation, then changing its gap to a different value can be done without any overshoot at all. This suggests a sort of two-step pull-in procedure to increase a safety margin against the head collision with the disc. In an embodiment the air gap is lowered via such a series of set points. Namely, the first target gap (33nm in Fig. 13, for instance) for the hand-over control is much higher than the actually required target gap (24nm in Fig.14). Once the servo is in lock around the first target gap, then it finally moves to the final required target gap in a safe way. It is to be noted that the multi step lowering of the gap distance is performed in the closed loop mode, i.e. while the scanning system is already in lock and operational for reading or writing data. This is different from the hand-over mode, wherein the first reference is at the verge of the near-field region, e.g. just where the GES signal becomes available, and the second reference is the working near-field distance.

Finally it is noted that the key to the sinusoidal excitation for the approach control is to generate an increasing periodical signal. This may be achieved by modulating an increasing signal, which for example is a ramp signal, with a sinusoidal signal. The purpose of the periodical element is to guarantee that the optical head velocity is zero or very small when the head reaches the near-field regime. Under this same rationale, various embodiments for the actual implementation are possible.

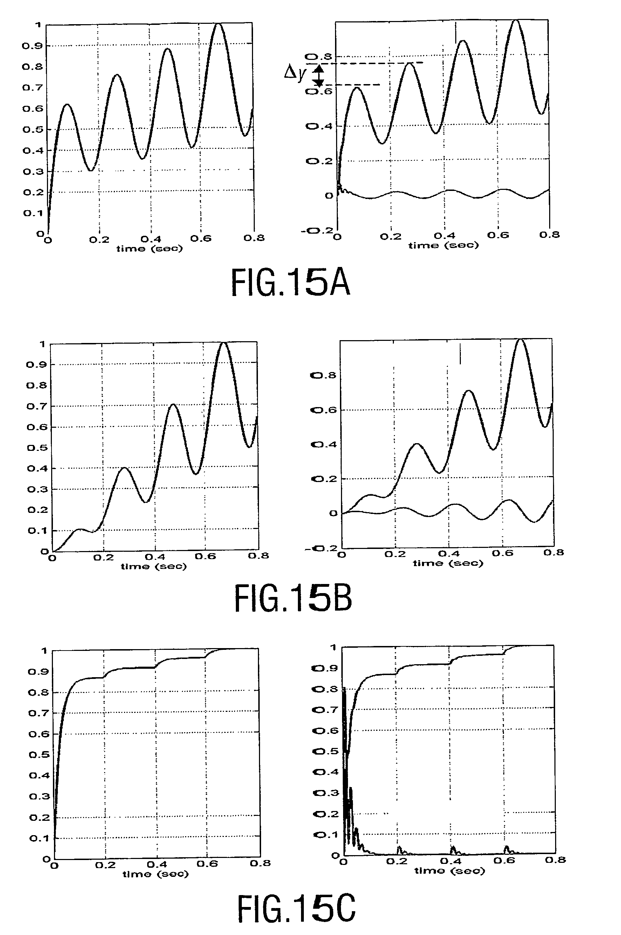

Fig. 15 shows various embodiments of an increasing periodical excitation signal. Fig.15A shows a slightly increasing amplitude periodical signal superposed on a ramp. Fig 15B shows a strongly increasing amplitude sinusoidal signal superposed on a ramp. Yet another possibility is presented in Fig.15C, in which a low-pass filtered staircase signal is applied to the actuator. In each of the Figures the left graph shows a normalized control current, and the right graph shows the normalized position (upper curve) and velocity (lower curve), the velocity being substantially zero at the approach instants where the lens is near to the surface.

Note the practical consideration that, in all of the embodiments, the frequency of the excitation input signal should be chosen well below the resonance frequency of the underlying actuator to avoid the undesirable resonant oscillation during the approach control. Furthermore, the increment of the actuator position between each of the approach instants, which is for instance denoted by $\Delta y$ in Fig.15A, should be smaller than the GES linear range.

Although the invention has been mainly explained by embodiments of the air gap servo applied to the specific near field optical recording system as described in doc[1] and doc[2], the invention is also suitable for other record carrier and head systems that need a small air gap between any lens and record carrier surface, such as rectangular optical cards, magneto-optical discs or any other type of information storage system, or a near-field scanning microscope system. Hence the words "*near-field optical recording*" include any such system. It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' or 'units' may be represented by the same item of hardware or software. Further, the scope of the invention is not limited to the embodiments, and the invention lies in each and every novel feature or combination of features described above.

**Claims**

1. Device for near field optical recording, information being represented by marks in a track on a record carrier (11), the device comprising

   - a head (22) including a lens to be positioned by a lens actuator at a near field distance from a surface of the record carrier for generating a scanning spot on the track, and
   - an air gap controller (65) for controlling an air gap between the lens and the surface, which air gap controller has an approach mode for bringing the lens from a remote distance to the near field distance,

   **characterized in that** the air gap controller is arranged

   - for providing an increasing periodical excitation signal to the lens actuator for generating a sequence of periods in which the lens is driven to approach the surface, the lens at approach instants in the periods having substantially zero velocity in a direction perpendicular to the surface, and the sequence of periods bringing the lens subsequently closer to the surface, and
   - for switching to a closed loop mode when the lens is within the near field distance (55) at one of the approach instants.

2. Device as claimed in claim 1, wherein the increasing periodical excitation signal comprises a sinusoidal signal.

3. Device as claimed in claim 1 or 2, wherein the increasing periodical excitation signal comprises a periodical signal of increasing amplitude.

4. Device as claimed in claim 1 or 2, wherein the increasing periodical excitation signal comprises a ramp component.

5. Device as claimed in claim 1, wherein the increasing periodical excitation signal comprises a low-pass filtered staircase component.

**6.** Device as claimed in claim 1, wherein the air gap controller (65) comprises a reference generator (80) for, in a hand-over mode, providing a reference near field distance changing from a first target near field distance to a second, lower target near field distance via a transfer function.

**7.** Device as claimed in claim 6, wherein the reference generator is for providing reference values to a controller unit (101,120) based on a two degree of freedom control technique in said hand-over mode.

**8.** Pull-in method for bringing a lens from a remote distance to a near field distance from a surface of a record carrier (11) for use in near field optical recording, information being represented by marks in a track on the record carrier to be scanned via a head (22) including the lens,
**characterized in that** the method comprises

- providing an increasing periodical excitation to a lens actuator for generating a sequence of periods in which the lens is driven to approach the surface, the lens at approach instants in the periods having substantially zero velocity in a direction perpendicular to the surface, and the sequence of periods bringing the lens subsequently closer to the surface,
- detecting when the lens is within the near field distance at one of the approach instants, and subsequently
- switching an air gap servo system to a closed loop mode.

**9.** Method as claimed in claim 8, wherein the increasing periodical excitation comprises a sinusoidal signal of increasing amplitude.

**Patentansprüche**

**1.** Einrichtung zum Near-Field Optical Recording (optische Aufzeichnung im Nahfeld), wobei Informationen durch Markierungen in einer Spur auf einem Aufzeichnungsträger (11) repräsentiert werden,
wobei die Einrichtung umfasst:

- einen Kopf (22), der eine Linse enthält, die durch einen Linsenstellglied in einem Nahfeldabstand von einer Oberfläche des Aufzeichnungsträgers zu positionieren ist, um einen Abtastfleck auf der Spur zu erzeugen, und
- eine Luftspalt-Steuereinheit (65) zur Steuerung des Luftspalts zwischen der Linse und der Oberfläche, wobei diese Luftspalt-Steuereinheit eine Annäherungs-Betriebsart aufweist, um die Linse aus einem weiten Abstand in den Nahfeldabstand zu bringen,

**dadurch gekennzeichnet, dass** die Luftspalt-Steuereinheit dafür vorgesehen ist,

- dem Linsenstellglied ein ansteigendes periodisches Erregungssignal zuzuführen, zum Erzeugen einer Folge von Zeitabschnitten, in welchen die Linse so angesteuert wird, dass sie sich der Oberfläche nähert, wobei die Linse zu Annäherungsmomenten in den Zeitabschnitten eine im Wesentlichen null betragende Geschwindigkeit in einer Richtung senkrecht zur Oberfläche aufweist und die Folge von Zeitabschnitten die Linse nacheinander immer näher an die Oberfläche bringt, und
- zu einer Betriebsart im geschlossenen Regelkreis umzuschalten, wenn sich die Linse zu einem der Annäherungsmomente innerhalb des Nahfeldabstands (55) befindet.

**2.** Einrichtung nach Anspruch 1, wobei das ansteigende periodische Erregungssignal ein sinusförmiges Signal umfasst.

**3.** Einrichtung nach Anspruch 1 oder 2, wobei das ansteigende periodische Erregungssignal ein periodisches Signal mit wachsender Amplitude umfasst.

**4.** Einrichtung nach Anspruch 1 oder 2, wobei das ansteigende periodische Erregungssignal eine rampenförmige Komponente umfasst.

**5.** Einrichtung nach Anspruch 1, wobei das ansteigende periodische Erregungssignal eine tiefpassgefilterte treppenförmige Komponente umfasst.

**6.** Einrichtung nach Anspruch 1, wobei die Luftspalt-Steuereinheit (65) einen Referenzgenerator (80) umfasst, der dafür vorgesehen ist, in einer Übergabe-Betriebsart einen Referenz-Nahfeldabstand bereitzustellen, der sich von einem ersten Ziel-Nahfeldabstand durch eine Übergangsfunktion zu einem zweiten, geringeren Ziel-Nahfeldabstand ändert.

7. Einrichtung nach Anspruch 6, wobei der Referenzgenerator dafür vorgesehen ist, einer Steuereinheit (101, 120), die auf einem Steuerungsverfahren mit zwei Freiheitsgraden in der Übergabe-Betriebsart beruht, Referenzwerte zu liefern.

8. Pull-in-Verfahren zum Bringen einer Linse aus einem weiten Abstand in einen Nahfeldabstand von einer Oberfläche eines Aufzeichnungsträgers (11) zur Verwendung beim Near-Field Optical Recording, wobei Informationen durch Markierungen in einer Spur auf dem Aufzeichnungsträger repräsentiert werden, die mittels eines die Linse enthaltenden Kopfes (22) abzutasten ist,
   **dadurch gekennzeichnet, dass** das Verfahren umfasst:

   - Zuführen eines ansteigenden periodischen Erregungssignals zu einem Linsenstellglied, zum Erzeugen einer Folge von Zeitabschnitten, in welchen die Linse so angesteuert wird, dass sie sich der Oberfläche nähert, wobei die Linse zu Annäherungsmomenten in den Zeitabschnitten eine im Wesentlichen null betragende Geschwindigkeit in einer Richtung senkrecht zur Oberfläche aufweist und die Folge von Zeitabschnitten die Linse nacheinander immer näher an die Oberfläche bringt,
   - Detektieren, wann sich die Linse zu einem der Annäherungsmomente innerhalb des Nahfeldabstands befindet, und anschließend
   - Umschalten eines Luftspalt-Servosystems zu einer Betriebsart im geschlossenen Regelkreis.

9. Verfahren nach Anspruch 8, wobei das ansteigende periodische Erregungssignal ein sinusförmiges Signal mit wachsender Amplitude umfasst.


**Revendications**

1. Dispositif pour l'enregistrement en champ proche, d'informations représentées par des marques dans une piste sur un support d'enregistrement (11),
   le dispositif comprenant

   - une tête (22) comprenant une lentille qui doit être positionnée par un actionneur de lentille à une distance de champ proche d'une surface du support d'enregistrement pour générer un spot de balayage sur la piste, et
   - un contrôleur de hauteur de survol (65) pour commander une hauteur de survol entre la lentille et la surface, lequel contrôleur de hauteur de survol présente un mode d'approche pour amener la lentille d'une distance lointaine à la distance de champ proche,

   **caractérisé en ce que** le contrôleur de hauteur de survol est agencé

   - pour fournir un signal d'excitation périodique croissant à l'actionneur de lentille afin de générer une séquence de périodes dans laquelle la lentille est entraînée de manière à s'approcher de la surface, la lentille, aux instants d'approche dans les périodes, ayant une vitesse pratiquement nulle dans une direction perpendiculaire à la surface, et la séquence de périodes amenant la lentille de plus en plus près de la surface, et
   - pour commuter sur un mode en boucle fermée lorsque la lentille se trouve dans les limites de la distance de champ proche (55) à un des instants d'approche.

2. Dispositif suivant la revendication 1, dans lequel le signal d'excitation périodique croissant comprend un signal sinusoïdal.

3. Dispositif suivant la revendication 1 ou 2, dans lequel le signal d'excitation périodique croissant comprend un signal périodique d'amplitude croissante.

4. Dispositif suivant la revendication 1 ou 2, dans lequel le signal d'excitation périodique croissant comprend une composante de rampe.

5. Dispositif suivant la revendication 1, dans lequel le signal d'excitation périodique croissant comprend une composante en escalier filtrée passe-bas.

**6.** Dispositif suivant la revendication 1, dans lequel le contrôleur de hauteur de survol (65) comprend un générateur de référence (80) pour, dans un mode de transfert, fournir une distance de champ proche de référence passant d'une première distance de champ proche cible à une seconde distance de champ proche cible, inférieure, par le biais d'une fonction de transfert.

**7.** Dispositif suivant la revendication 6, dans lequel le générateur de référence est destiné à fournir des valeurs de référence à une unité de contrôleur (101, 120) sur la base d'une technique de commande à deux degrés de liberté dans ledit mode de transfert.

**8.** Procédé d'accrochage pour amener une lentille d'une distance lointaine à une distance de champ proche d'une surface d'un support d'enregistrement (11) en vue d'un enregistrement optique en champ proche, les informations étant représentées par des marques dans une piste sur le support d'enregistrement destinées à être balayées au moyen d'une tête (22) comprenant la lentille,
**caractérisé en ce que** le procédé comprend

- la fourniture d'une excitation périodique croissante à un actionneur de lentille pour générer une séquence de périodes au cours de laquelle la lentille est entraînée pour s'approcher de la surface, la lentille, aux instants d'approche dans les périodes, ayant une vitesse sensiblement nulle dans une direction perpendiculaire à la surface, et la séquence de périodes amenant la lentille de plus en plus près de la surface,
- la détection du moment où la lentille se trouve dans les limites de la distance de champ proche à l'un des instants d'approche, et ensuite
- la commutation d'un système d'asservissement de hauteur de survol vers un mode en boucle fermée.

**9.** Procédé suivant la revendication 8, dans lequel l'excitation périodique croissante comprend un signal sinusoïdal d'amplitude croissante.

FIG.1

FIG.2

FIG.3

FIG.4

FIG.5

EP 1 741 097 B1

FIG.6

FIG.7

80

81

$K_p^{ref}$

?

83

$\int$

82

$K_v^{ref}$

84

$\int$

Ref2

$a_d$

$v_d$

$y_d$

$v_d(0)$

$y_d(0)$

## FIG.8

94

91

3

Ref1

$y_d$

settling time

2

1

Ref2

0

0        0.005        0.01        0.015    92    0.02

1

$v_d$

0

-1

0        0.005        0.01        0.015    93    0.02

1

$a_d$

0

-1

0        0.005        0.01        0.015        0.02

time (sec)

## FIG.9

FIG.10

EP 1 741 097 B1

FIG.11

EP 1 741 097 B1

FIG.12

FIG.13

FIG.14

FIG.15A

FIG.15B

FIG.15C

21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040013077 A

### Non-patent literature cited in the description

- **T. ISHIMOTO ; K. SAITO ; T. KONDO ; A. NAKAOKI ; M. YAMAMOTO.** Gap Servo System for a Biaxial Device Using an Optical Gap Signal in a Near Field Readout System. ISOM/ODS, 2002

- **K. SAITO.** Readout Method for Read Only Memory Signal and Air Gap Control Signal in a Near Field Optical Disc System. *Jpn. J. Appl. Phys.,* 2002, vol. 41, 1898-1902
- **G. FRANKLIN ; J. POWELL ; A. EMAMI-NAEINI.** Feedback Control of Dynamic Systems. Prentice-Hall, 2002